# EUROPÄISCHE PATENTSCHRIFT

(11) **EP 2 729 278 B1**
(45) Veröffentlichungstag und Bekanntmachung des Hinweises auf die Patenterteilung: **18.03.2015**
(21) Anmeldenummer: 12738058.2
(22) Anmeldetag: 06.07.2012
(51) Int. Cl.: B23Q 3/155, B23Q 11/10

(54) **VERFAHREN UND WERKZEUGMASCHINE ZUM SPANENDEN BEARBEITEN VON METALLISCHEN WERKSTÜCKEN**
METHOD AND MACHINE TOOL FOR MACHINING METALLIC WORKPIECES
PROCÉDÉ ET MACHINE-OUTIL POUR L'USINAGE PAR ENLÈVEMENT DE COPEAUX DE PIÈCES MÉTALLIQUES

(30) Priorität: 08.07.2011 DE 102011078896
(43) Veröffentlichungstag der Anmeldung: 14.05.2014
(73) Patentinhaber: MAG IAS GmbH, 73033 Göppingen (DE)
(72) Erfinder: MEIDAR, Moshe Israel, Miami, FL 33131 (US); LANG, Heiner, 73728 Esslingen (DE); HORN, Wolfgang, 73035 Göppingen (DE); KOLB, Holger, 71636 Ludwigsburg (DE); WATTS, Douglas, Harrison Township, MI 48045 (US)
(74) Vertreter: Rau, Schneck & Hübner Patentanwälte Rechtsanwälte PartGmbB
(86) Internationale Anmeldenummer: PCT/EP2012/063223
(87) Internationale Veröffentlichungsnummer: WO 2013/007624

(56) Entgegenhaltungen:
- EP-B1- 1 208 940
- DE-A1-102007 045 045

## Beschreibung

Die Erfindung betrifft ein Verfahren zum spanenden Bearbeiten von metallischen Werkstücken. Ferner betrifft die Erfindung eine Werkzeugmaschine zum spanenden Bearbeiten von metallischen Werkstücken gemäß dem Oberbegriff des Anspruchs 9.

Aus der DE 601 11 162 T2 (entspricht EP 1 208 940 B1) ist eine Werkzeugmaschine mit einem Werkzeugrevolver zum spanenden Bearbeiten von metallischen Werkstücken bekannt. Der Werkzeugrevolver weist mehrere Werkzeug-Halter auf, in denen jeweils ein zur Bearbeitung des Werkstücks vorgesehenes Werkzeug angeordnet ist. Durch den Werkzeugrevolver wird kryogenes Kühlmedium zu demjenigen Werkzeug geführt, das gerade in Eingriff mit dem zu bearbeitenden Werkstück ist. Durch die effektive Kühlung mittels des kryogenen Kühlmediums wird eine hohe Produktivität bei der Werkstückbearbeitung erzielt.

Aus der DE 10 2007 045 045 A1 ist eine Werkzeugsmaschine bekannt, die derart ausgebildet ist, dass mindestens ein Vorbearbeitungswerkzeug zur spanenden Vorbearbeitung eines Werkstücks mit einem Werkzeugsträger lösbar verbindbar ist und mindestens ein Hohnwerkzeugs zur hohnenden Bearbeitung des vorbearbeiteten Werkstücks mit einem Werkzeugträger lösbar verbindbar ist.

Der Erfindung liegt die Aufgabe zugrunde, ein Verfahren zu schaffen, das eine höhere Produktivität bei der spanenden Bearbeitung von metallischen Werkstücken ermöglicht.

Diese Aufgabe wird durch ein Verfahren mit den Merkmalen des Anspruchs 1 gelöst. Mit dem erfindungsgemäßen Verfahren wird die Produktivität bei der Werkstückbearbeitung dadurch erhöht, dass während der Bearbeitung des Werkstücks mittels eines ersten Werkzeugs ein zur nachfolgenden Bearbeitung vorgesehenes zweites Werkzeug mittels des kryogenen Kühlmediums hauptzeitparallel vorgekühlt wird. Zur kryogenen Werkstückbearbeitung müssen die Werkzeuge zunächst auf die erforderliche niedrige Betriebstemperatur heruntergekühlt werden, bevor mit dem Zerspanungsprozess begonnen werden kann. Dieser Kühlvorgang kann bei bekannten Verfahren und Werkzeugmaschinen zur kryogenen Werkstückbearbeitung erst dann beginnen, wenn sich das zur Bearbeitung vorgesehene Werkzeug in der Bearbeitungsposition bzw. in dem zur Bearbeitung vorgesehenen Werkzeug-Halter befindet. Beispielsweise kann der Kühlvorgang bei bekannten Verfahren und Werkzeugmaschinen erst dann beginnen, wenn sich das zur Bearbeitung vorgesehene Werkzeug in der Werkzeugspindel befindet, die an eine Zuführleitung für das kryogene Kühlmedium angeschlossen ist.

Dadurch, dass bereits während der Werkstückbearbeitung mittels eines ersten Werkzeugs das nachfolgend zur Bearbeitung vorgesehene zweite Werkzeug mittels des kryogenen Kühlmediums gekühlt wird, wird die erforderliche Vorkühlzeit für das zweite Werkzeug aus der Maschinenhauptzeit heraus in die Maschinennebenzeit verlagert. Durch diese hauptzeitparallele Vorkühlung kann das Werkstück, nachdem dieses mittels des ersten Werkzeugs bearbeitet wurde, unmittelbar und ohne weitere Vorkühlung mittels des bereits vorgekühlten zweiten Werkzeugs weiterbearbeitet werden. Hierdurch geht keine Maschinenhauptzeit verloren, in der das zweite Werkzeug auf die niedrige Bearbeitungstemperatur heruntergekühlt werden müsste. Die kryogene Werkstückbearbeitung kann somit unmittelbar nach dem Werkzeugwechsel fortgeführt werden, wobei das zweite Werkzeug während der Bearbeitung mittels des kryogenen Kühlmediums gekühlt wird.

Die Vorkühlung eines nachfolgend zur Bearbeitung vorgesehenen Werkzeugs erfolgt beispielsweise mittels einer Vorkühleinrichtung, die mit einem Werkzeugmagazin, einem Werkzeugrevolver oder einem beliebigen sonstigen Werkzeug-Halter koppelbar ist. Das erfindungsgemäße Verfahren kann gemäß den Ansprüchen 2 bis 8 und insbesondere auch gemäß den Ansprüchen 9 bis 15 weitergebildet werden.

Ein Verfahren nach Anspruch 2 gewährleistet eine einfache und effektive Vorkühlung des zur Bearbeitung vorgesehenen zweiten Werkzeugs. Als kryogenes Kühlmedium kann beispielsweise flüssiger oder gasförmiger Stickstoff, flüssiger oder gasförmiger Sauerstoff, gasförmiger Wasserstoff, gasförmiges Helium, flüssiges oder gasförmiges Argon, gasförmiges Kohlendioxid und flüssiges oder gasförmiges Erdgas dienen. Vorzugsweise wird zur Vorkühlung und zur nachfolgenden Kühlung des Werkzeugs bei der Bearbeitung dasselbe kryogene Kühlmedium verwendet, vorzugsweise Stickstoff.

Ein Verfahren nach Anspruch 3 gewährleistet ein schnelles und effektives Vorkühlen des zur nachfolgenden Bearbeitung vorgesehenen Werkzeugs. Vorzugsweise weist das kryogene Kühlmedium die niedrige Temperatur auch noch dann auf, wenn dieses auf das vorzukühlende Werkzeug trifft bzw. dieses durchströmt.

Ein Verfahren nach Anspruch 4 gewährleistet, dass die Werkstückbearbeitung unmittelbar nach einem Werkzeugwechsel fortgeführt werden kann. Der Werkzeugwechsel kann beispielsweise stattfinden, indem das vorgekühlte zweite Werkzeug in den ersten Werkzeug-Halter eingewechselt wird, der beispielsweise als Werkzeugspindel ausgebildet sein kann. Alternativ kann der Werkzeugwechsel stattfinden, indem der zweite Werkzeug-Halter mit dem darin vorgehaltenen und vorgekühlten zweiten Werkzeug aus einer Vorhalteposition in die Bearbeitungsposition verlagert wird. Dies ist beispielsweise bei Werkzeugrevolvern der Fall, wo die unterschiedlichen Werkzeuge durch Rotation der Revolverscheibe aus einer Vorhalteposition in die Bearbeitungsposition gebracht werden. Die Vorkühleinrichtung ist insbesondere derart ausgebildet, dass der Werkzeugwechsel so schnell stattfindet, dass sich das zur Bearbeitung vorgesehene zweite Werkzeug bis zum Wechsel in die Bearbeitungsposition im Wesentlichen nicht erwärmt.

Ein Verfahren nach Anspruch 5 gewährleistet eine effektive Vorkühlung des zur Bearbeitung vorgesehenen Werkzeugs.

Ein Verfahren nach Anspruch 6 ermöglicht auf einfache Weise eine Vorkühlung. Die Vorkühleinrichtung weist beispielsweise einen thermisch isolierend ausgebildeten Speicher zum Bereitstellen des kryogenen Kühlmediums und ein zugehöriges Kühlaggregat zum Kühlen des kryogenen Kühlmediums sowie eine Vorkühl-Zuführleitung zum Zuführen des kryogenen Kühlmediums von dem Speicher zu dem zweiten Werkzeug-Halter auf. Die Vorkühl-Zuführleitung ist vorzugsweise thermisch isolierend ausgebildet. Vorzugsweise ist die Vorkühleinrichtung mit einer kryogenen Kühleinrichtung zur Kühlung der Werkzeuge während der Bearbeitung derart gekoppelt, dass zur Vorkühlung und zur Kühlung während der Bearbeitung das kryogene Kühlmedium aus demselben Speicher entnommen werden.

Ein Verfahren nach Anspruch 7 gewährleistet auf einfache Weise, dass beim Werkzeugwechsel kein kryogenes Kühlmedium unkontrolliert aus der Vorkühleinrichtung ausströmt. Hierdurch wird eine lange Betriebsdauer der Werkzeugmaschine gewährleistet, da kryogenes Kühlmedium nur dann aus der Vorkühleinrichtung ausströmt, wenn ein vorzukühlendes Werkzeug mit dieser gekoppelt ist.

Ein Verfahren nach Anspruch 8 gewährleistet eine einfache und effiziente Vorkühlung des zur Bearbeitung vorgesehenen Werkzeugs. Der Zustrom von kryogenem Kühlmedium wird nur dann von der Vorkühleinrichtung freigegeben, wenn das vorzukühlende Werkzeug mit der Vorkühleinrichtung gekoppelt ist.

Der Erfindung liegt ferner die Aufgabe zugrunde, eine Werkzeugmaschine der gattungsgemäßen Art derart weiterzubilden, dass eine Erhöhung der Produktivität bei der spanenden Bearbeitung von metallischen Werkstücken erzielt wird.

Diese Aufgabe wird durch eine Werkzeugmaschine mit den Merkmalen des Anspruchs 9 gelöst. Die Vorteile der erfindungsgemäßen Werkzeugmaschine entsprechen den bereits beschriebenen Vorteilen des erfindungsgemäßen Verfahrens. Die erfindungsgemäße Werkzeugmaschine weist eine Kühleinrichtung zur kryogenen Kühlung des ersten Werkzeugs auf, das sich gerade in Eingriff mit dem zu bearbeitenden Werkstück befindet. Darüber hinaus weist die Werkzeugmaschine eine Vorkühleinrichtung auf, die zum Vorkühlen eines in einem zweiten Werkzeug-Halter vorgehaltenen und zur nachfolgenden Bearbeitung des Werkstücks vorgesehenen zweiten Werkzeugs dient. Die kryogene Kühleinrichtung und die kryogene Vorkühleinrichtung werden mittels einer Steuereinrichtung derart angesteuert, dass während der Bearbeitung des Werkstücks mittels des ersten Werkzeugs das zur nachfolgenden Bearbeitung des Werkstücks vorgesehene zweite Werkzeug vorgekühlt und auf die erforderliche niedrige Bearbeitungstemperatur gebracht wird. Hierdurch wird in der bereits beschriebenen Weise die Vorkühlzeit für das zweite Werkzeug aus der Maschinenhauptzeit in die Maschinennebenzeit verlagert. Nach einem Wechsel des zweiten Werkzeugs in die zur Bearbeitung des Werkstücks vorgesehene Position kann somit unmittelbar mit der Bearbeitung des Werkstücks fortgefahren werden. Hierdurch wird die Maschinenhauptzeit bzw. die Zykluszeit für die Werkstückbearbeitung reduziert und die Produktivität der Werkzeugmaschine erhöht. Die erfindungsgemäße Werkzeugmaschine kann gemäß den Merkmalen der Ansprüche 1 bis 8 und 10 bis 15 weitergebildet werden.

Eine Werkzeugmaschine nach Anspruch 10 gewährleistet eine einfache Vorkühlung des zur Bearbeitung vorgesehenen Werkzeugs. Vorzugsweise sind der Speicher und das zugehörige Kühlaggregat sowohl Teil der Vorkühleinrichtung als auch Teil der Kühleinrichtung, so dass die Kühlung des das Werkstück bearbeitenden Werkzeugs und die Vorkühlung des zur Bearbeitung vorgesehenen Werkzeugs mit demselben kryogenen Kühlmedium erfolgen. Hierzu führen eine Vorkühl-Zuführleitung von dem Speicher zu dem zweiten Werkzeug-Halter und eine Kühl-Zuführleitung von dem Speicher zu dem ersten Werkzeug-Halter.

Eine Werkzeugmaschine nach Anspruch 11 gewährleistet eine effiziente Vorkühlung des zur Bearbeitung vorgesehenen Werkzeugs. Die Zufuhr des kryogenen Kühlmediums zu dem vorzukühlenden Werkzeug ist nur dann freigegeben, wenn das Werkzeug mit der Kopplungseinheit mechanisch gekoppelt ist. Die Freigabe des kryogenen Kühlmediums kann entweder rein mechanisch oder elektromechanisch erfolgen.

Eine Werkzeugmaschine nach Anspruch 12 gewährleistet auf einfache Weise ein Koppeln und Entkoppeln der Vorkühleinrichtung mit bzw. von dem zweiten Werkzeug-Halter. Hierzu kann entweder die Vorkühleinrichtung fest an einem Grundgestell der Werkzeugmaschine angeordnet und der zweite Werkzeug-Halter verlagerbar sein oder umgekehrt.

Eine Werkzeugmaschine nach Anspruch 13 gewährleistet auf einfache Weise die Vorkühlung einer Vielzahl unterschiedlicher Werkzeuge. Der erste Werkzeug-Halter kann beispielsweise als übliche Werkzeugspindel ausgebildet sein, die im Pick-Up-Verfahren einen Werkzeugwechsel durchführt und hierbei das erste Werkzeug in dem Werkzeugmagazin ablegt und das vorgekühlte zweite Werkzeug aus dem zweiten Werkzeug-Halter aufnimmt. Alternativ kann hierzu ein üblicher Werkzeugwechsler zum Einsatz kommen.

Eine Werkzeugmaschine nach Anspruch 14 gewährleistet eine effiziente Vorkühlung und gleichermaßen eine effiziente Kühlung des Werkzeugs während der Bearbeitung. Der Speicher ist sowohl Teil der Vorkühleinrichtung als auch Teil der Kühleinrichtung, so dass nur ein Speicher erforderlich ist, um das kryogene Kühlmedium über die Vorkühl-Zuführleitung zu dem zweiten Werkzeug-Halter und über die Kühl-Zuführleitung zu dem ersten Werkzeug-Halter zu führen.

Eine Werkzeugmaschine nach Anspruch 15 gewährleistet eine effiziente Vorkühlung und Kühlung des jeweiligen Werkzeugs. Die Zuführleitungen weisen vorzugsweise eine spezifische Wärmeleitfähigkeit bei 0 °C von höchstens 0,40 W/(mK), insbesondere von höchstens 0,30 W/(mK), und insbesondere von höchstens 0,20 W/(mK) auf. Durch die thermisch isolierende Ausbildung wird eine unerwünschte Erwärmung des kryogenen Kühlmediums auf dem Weg zu dem ersten bzw. zweiten Werkzeug-Halter vermieden. Auf diese Weise kann das jeweilige Werkzeug äußerst effektiv vorgekühlt bzw. gekühlt werden. Vorzugsweise sind die Zuführleitungen vollständig, also über die gesamte Länge thermisch isolierend ausgebildet. Weiterhin sind die Zuführleitungen vorzugsweise vakuumisoliert ausgebildet. Hierzu weisen diese ein inneres Rohr und ein dieses umgebendes äußeres Rohr auf, die endseitig miteinander verbunden sind und einen evakuierten Isolationsraum begrenzen. Die Zuführleitungen weisen bei einer vakuumisolierten Ausbildung vorzugsweise eine spezifische Wärmeleitfähigkeit bei 0 °C von höchstens 0,01 W/(mK) auf. Bei einer vakuumisolierten Ausbildung ist vorzugsweise mindestens eines der Rohre in seiner Länge veränderbar, so dass ein Ausgleich der unterschiedlichen Längenänderungen des inneren und des äußeren Rohrs möglich ist. Werden die Zuführleitungen von dem kryogenen Kühlmedium durchströmt, nimmt das jeweilige innere Rohr im Wesentlichen dessen Temperatur an, wohingegen sich das jeweilige äußere Rohr aufgrund des zwischen beiden Rohren angeordneten Isolationsmediums deutlich weniger abkühlt. Das innere Rohr ändert seine Länge dementsprechend deutlich mehr als das äußere Rohr. Um eine Beschädigung der Zuführleitungen zu vermeiden, ist mindestens eines der Rohre in seiner Länge veränderbar. Vorzugsweise weist das äußere Rohr einen mäanderförmigen Metallbalg zum thermischen Längenausgleich auf.

Weitere Merkmale, Vorteile und Einzelheiten der Erfindung ergeben sich aus der nachfolgenden Beschreibung eines Ausführungsbeispiels. Es zeigen:

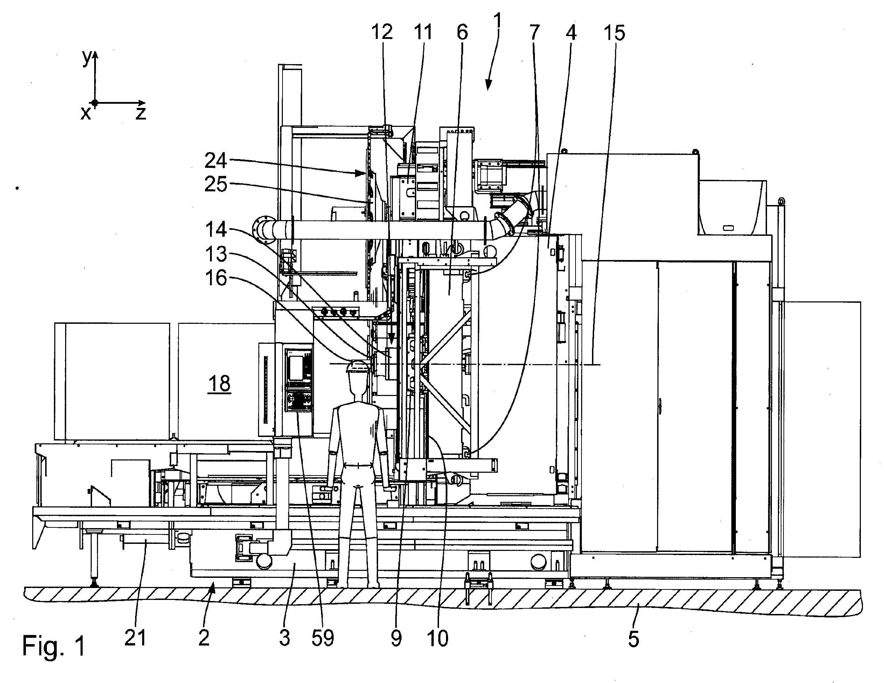

- Fig. 1: eine Werkzeugmaschine mit einem Werkzeugmagazin und einer damit zusammenwirkenden Vorkühleinrichtung,

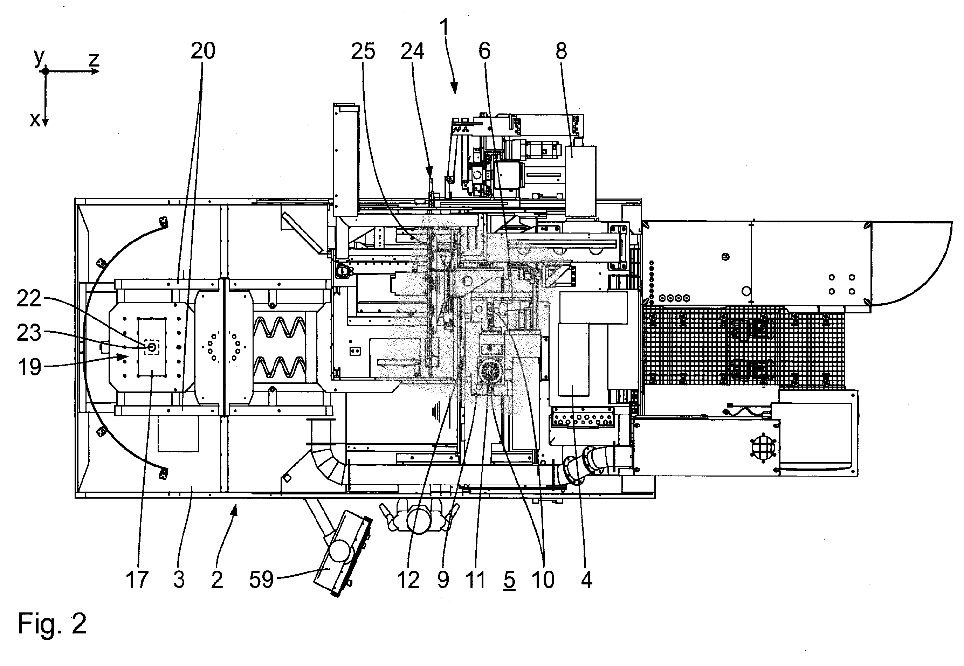

- Fig. 2: eine Draufsicht auf die Werkzeugmaschine in Fig. 1,

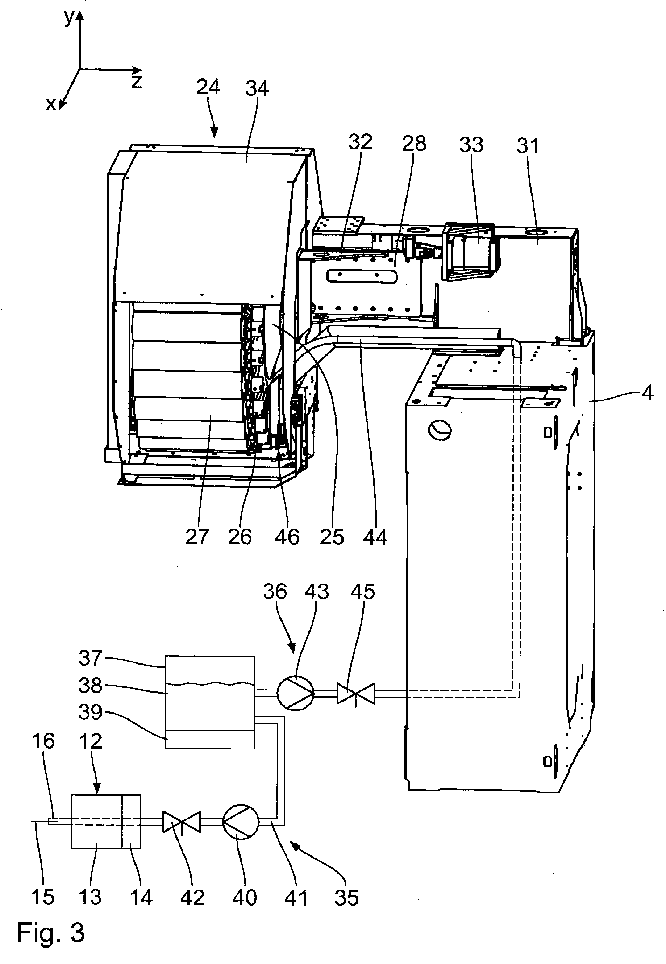

- Fig. 3: eine schematische Darstellung der mit dem Werkzeugmagazin zusammenwirkenden Vorkühleinrichtung,

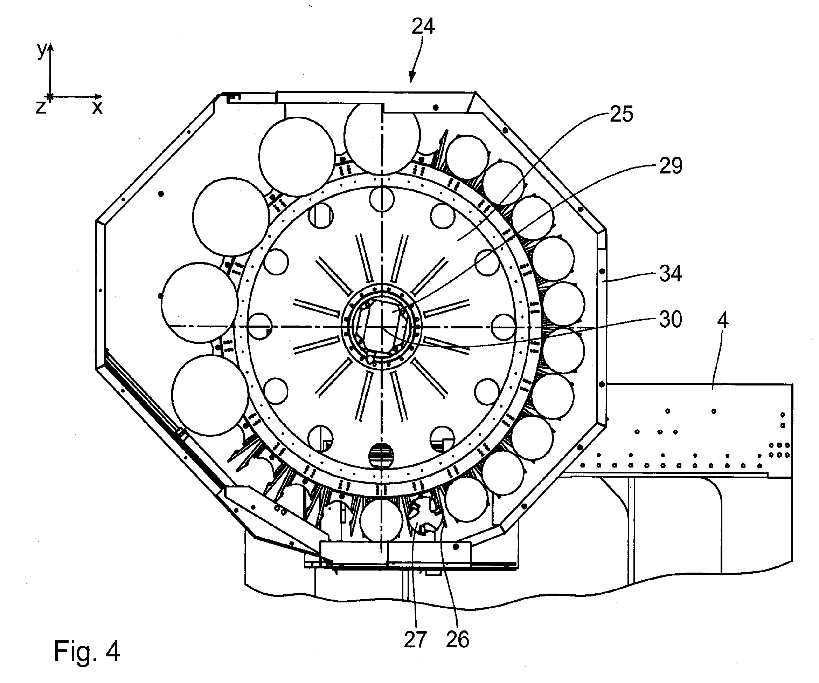

- Fig. 4: eine Frontalansicht auf das Werkzeugmagazin,
- Fig. 5: eine Schnittdarstellung einer mit einem vorzukühlenden Werkzeug gekoppelten Kopplungseinheit der Vorkühleinrichtung,
- Fig. 6: eine vergrößerte Darstellung der Kopplungseinheit in Fig. 5,

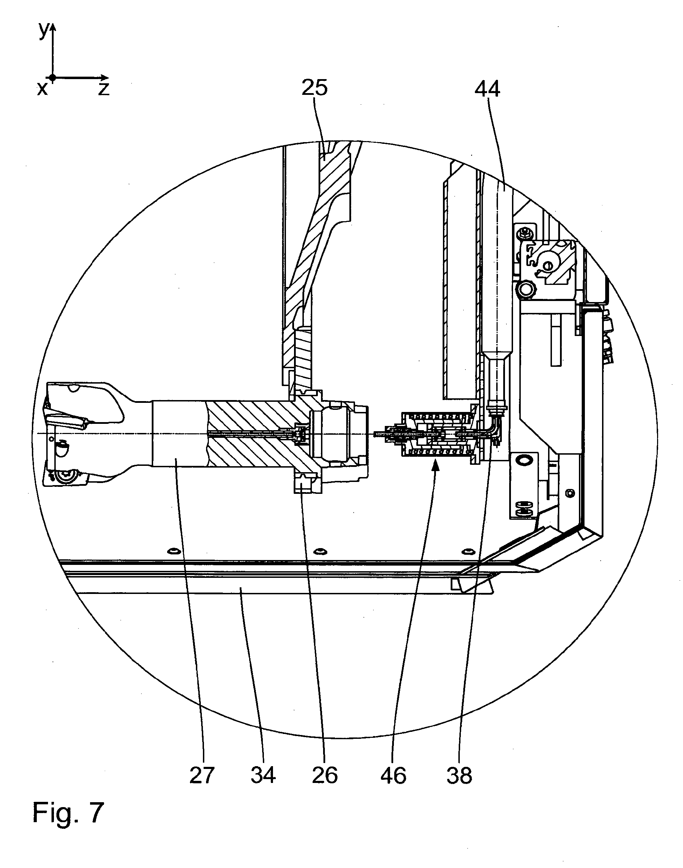

- Fig. 7: eine Schnittdarstellung der von dem vorgekühlten Werkzeug entkoppelten Kopplungseinheit der Vorkühleinrichtung, und

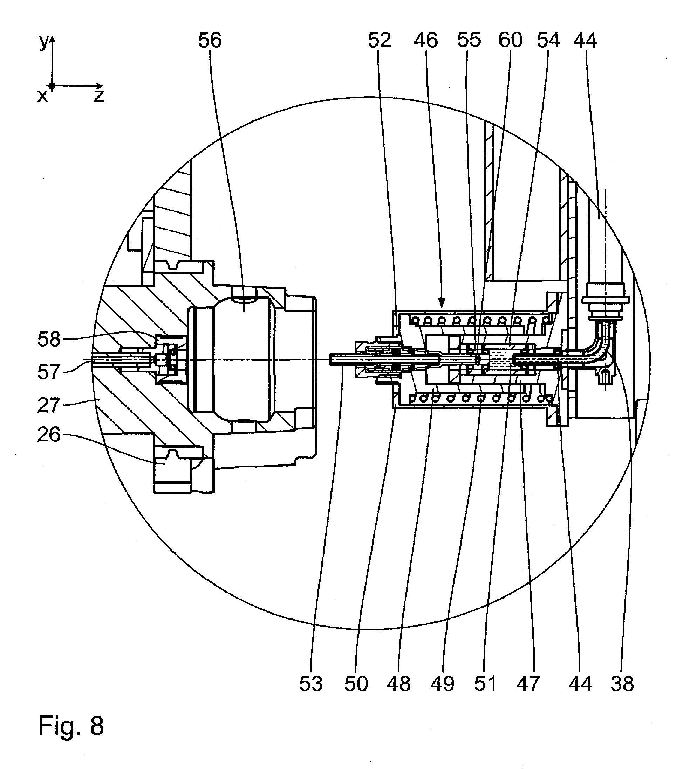

- Fig. 8: eine vergrößerte Darstellung der Kopplungseinheit in Fig. 7.

Eine Werkzeugmaschine 1 weist ein Grundgestell 2 mit einem Maschinenbett 3 und einem darauf angeordneten Ständer 4 auf. Das Maschinenbett 3 verläuft im Wesentlichen in einer horizontalen x- und einer horizontalen z-Richtung. Der Ständer 4 ist endseitig an dem Maschinenbett 3 befestigt und verläuft im Wesentlichen in der x-Richtung und einer vertikalen y-Richtung. Das Grundgestell 2 ist auf einer Fundamentplatte 5 befestigt. Die x-, y- und z-Richtungen verlaufen jeweils senkrecht zueinander und bilden ein kartesisches Koordinatensystem.

An dem Ständer 4 ist ein x-Schlitten 6 angeordnet, der auf zugehörigen x-Führungsschienen 7 mittels eines x-Antriebsmotors 8 parallel zu der x-Richtung linear verfahrbar ist. An dem x-Schlitten 6 ist wiederum ein y-Schlitten 9 angeordnet, der auf y-Führungsschienen 10 mittels eines y-Antriebsmotors 11 parallel zu der y-Richtung linear verfahrbar ist. An dem y-Schlitten 9 ist eine Werkzeugspindel 12 befestigt, die einen als Spannsatz ausgebildeten ersten Werkzeug-Halter 13 aufweist, der mittels eines Antriebsmotors 14 um eine parallel zu der z-Richtung verlaufende Drehachse 15 drehantreibbar ist. In dem ersten Werkzeug-Halter 13 ist ein erstes Werkzeug 16 gehalten, das zur spanenden Bearbeitung eines metallischen Werkstücks 17 dient.

Vor der Werkzeugspindel 12 weist die Werkzeugmaschine 1 einen Arbeitsraum 18 auf, in dem auf dem Maschinenbett 3 eine Werkstück-Aufnahme 19 für das zu bearbeitende Werkstück 17 angeordnet ist. Die Werkstück-Aufnahme 19 ist auf z-Führungsschienen 20 gelagert und mittels eines z-Antriebsmotors 21 parallel zu der z-Richtung linear verfahrbar. Die Werkstück-Aufnahme 19 ist als Drehteller ausgebildet und mittels eines Antriebsmotors 22 um eine parallel zu der y-Richtung verlaufende Drehachse 23 drehbar. Auf dem Drehteller 19 können beispielsweise Werkstück-Paletten mit darauf gespannten Werkstücken 17 befestigt werden.

Die Werkzeugmaschine 1 weist ein Werkzeugmagazin 24 auf, das an dem Ständer 4 befestigt ist. Das Werkzeugmagazin 24 ist als Scheibenmagazin ausgebildet. Das Werkzeugmagazin 24 weist dementsprechend eine Magazinscheibe 25 mit einer Vielzahl daran angeordneter Werkzeug-Halter 26 auf. In den Werkzeug-Haltern 26 sind zur nachfolgenden Bearbeitung des Werkstücks 17 unterschiedliche zweite Werkzeuge 27 angeordnet. Die Magazinscheibe 25 ist drehbar an einem Magazinschlitten 28 gelagert und mittels eines Antriebsmotors 29 um eine Drehachse 30 relativ zu dem Magazinschlitten 28 drehantreibbar. Der Magazinschlitten 28 ist parallel zu der z-Richtung an einem Magazinträger 31 verfahrbar angeordnet, der wiederum an dem Ständer 4 befestigt ist. Hierzu sind an dem Magazinträger 31 z-Führungsschienen 32 angeordnet, auf denen der Magazinschlitten 28 mittels eines Antriebsmotors 33 parallel zu der z-Richtung linear verfahrbar ist. Die Magazinscheibe 25 ist von einem Magazingehäuse 34 teilweise umgeben.

Die Werkzeugmaschine 1 weist zur kryogenen Kühlung der Werkzeuge 16, 27 eine Kühleinrichtung 35 sowie eine zugehörige Vorkühleinrichtung 36 auf. Die Kühleinrichtung 35 und die Vorkühleinrichtung 36 weisen einen gemeinsamen Speicher 37 zum Bereitstellen eines kryogenen Kühlmediums 38 auf, der thermisch isolierend ausgebildet ist. Zur Kühlung des kryogenen Kühlmediums 38 ist ein Kühlaggregat 39 vorgesehen. Mittels einer ersten Förderpumpe 40 ist das kryogene Kühlmedium 38 über eine Kühl-Zuführleitung 41 von dem Speicher 37 zu dem ersten Werkzeug-Halter 13 bzw. dem darin gehaltenen Werkzeug 16 zuführbar. In der Kühl-Zuführleitung 41 ist zur Unterbrechung der Zufuhr des kryogenen Kühlmediums 38 zu dem Werkzeug-Halter 13 ein erstes Absperrventil 42 angeordnet. Der Speicher 37, das Kühlaggregat 39, die Förderpumpe 40, die Kühl-Zuführleitung 41 und das Absperrventil 42 bilden die Kühleinrichtung 35.

Zum Vorkühlen eines der zweiten Werkzeuge 27 ist das kryogene Kühlmedium 38 mittels einer zweiten Förderpumpe 43 von dem Speicher 37 über eine Vorkühl-Zuführleitung 44 zu einem der zweiten Werkzeug-Halter 26 des Werkzeugmagazins 24 zuführbar. In der Vorkühl-Zuführleitung 44 ist zur Unterbrechung der Zufuhr des kryogenen Kühlmediums 38 ein zweites Absperrventil 45 angeordnet. Der Speicher 37, das Kühlaggregat 39, die Förderpumpe 43, die Vorkühl-Zufuhrleitung 44, das Absperrventil 45 und eine nachfolgend noch beschriebene Kopplungseinheit 46 bilden die Vorkühleinrichtung 36. Die Zuführleitungen 41, 44 sind zur Vermeidung einer unerwünschten Erwärmung des kryogenen Kühlmediums 38 vakuumisoliert ausgebildet.

Die Kopplungseinheit 46 ist endseitig an der Vorkühl-Zuführleitung 44 angeordnet und derart ausgebildet, dass die Zufuhr des kryogenen Kühlmediums 38 zu dem jeweiligen zweiten Werkzeug 27 freigegeben ist, wenn das Werkzeug 27 mit der Kopplungseinheit 46 mechanisch gekoppelt ist und die Zufuhr des kryogenen Kühlmediums 38 zu dem jeweiligen Werkzeug 27 unterbrochen ist, wenn das Werkzeug 27 von der Kopplungseinheit 46 mechanisch entkoppelt ist. Zur mechanischen Kopplung bzw. Entkopplung des jeweiligen Werkzeugs 27 mit der Kopplungseinheit 46 sind die Werkzeug-Halter 26 des Werkzeugmagazins 24 relativ zu der Kopplungseinheit 46 mittels des Antriebsmotors 33 linear verfahrbar.

Die Kopplungseinheit 46 ist an dem Magazingehäuse 34 befestigt und als federbelasteter Schieber ausgebildet. Hierzu weist die Kopplungseinheit 46 ein inneres Schiebeteil 47 und ein äußeres Schiebeteil 48 auf, die ineinander verschiebbar geführt und mittels eines Federelements 49 vorgespannt sind. Die Schiebeteile 47, 48 und das Federelement 49 sind in einem zugehörigen Gehäuse 50 angeordnet. Die Schiebeteile 47, 48 begrenzen einen Innenraum 51, in den die Vorkühl-Zuführleitung 44 geführt ist. An einer dem Werkzeug 27 zugewandten Seite weist das Gehäuse 50 eine Durchgangsöffnung 52 auf, durch die eine Kopplungsleitung 53 von dem Innenraum 51 nach außen geführt ist. Die Kopplungsleitung 53 ist an dem in dem Innenraum 51 angeordneten Ende stirnseitig verschlossen, weist jedoch an diesem Ende umfangsseitig Eintrittsöffnungen 60 auf. Das innere Schiebeteil 47 weist zum Freigeben bzw. Schließen dieser Eintrittsöffnungen 60 an einer der Kopplungsleitung 53 zugewandten Seite einen Freigabeabschnitt 54 und einen Schließabschnitt 55 auf.

Die Kopplungseinheit 46 ist derart ausgebildet, dass diese in eine Halteausnehmung 56 des Werkzeugs 27 einführbar und die Kopplungsleitung 53 mit einem im Werkzeug 27 verlaufenden Kühlkanal 57 verbindbar ist. Hierzu ist endseitig an dem Kühlkanal 57 ein Dichteinsatz 58 angeordnet, mittels dem das äußere Schiebeteil 48 bei einer Kopplung des Werkzeugs 27 betätigbar ist.

Zum Steuern der Werkzeugmaschine 1 weist diese eine Steuereinrichtung 59 auf, die derart ausgebildet ist, dass während der Bearbeitung des Werkstücks 17 mittels des ersten Werkzeugs 16 das nachfolgend zur Bearbeitung des Werkstücks 17 vorgesehene zweite Werkzeug 27 mittels des kryogenen Kühlmediums 38 vorkühlbar ist.

Zum Bearbeiten des Werkstücks 17 ist dieses in üblicher Weise auf der Werkstück-Aufnahme 19 und das erste Werkzeug 16 in dem ersten Werkzeug-Halter 13 der Werkzeugspindel 12 gespannt. Das Werkstück 17 wird in üblicher Weise mit dem Werkzeug 16 bearbeitet, in dem die Werkstück-Aufnahme 19 und/oder die Werkzeugspindel 12 in x-, y- und/oder z-Richtung linear verfahren werden. Das erste Werkzeug 16 wird während der Bearbeitung mittels des kryogenen Kühlmediums 38 gekühlt. Hierzu wird das kryogene Kühlmedium 38 mittels der Förderpumpe 40 aus dem Speicher 37 über die Kühl-Zuführleitung 41 zu der Werkzeugspindel 12 gefördert. Die Kühl-Zuführleitung 41 ist mit dem Kühlkanal 57 des Werkzeugs 16 gekoppelt, so dass das Werkzeug 16 während der Bearbeitung von dem kryogenen Kühlmedium 38 durchströmt und gekühlt wird. Das kryogene Kühlmedium 38 ist hierbei mindestens ein Medium aus der Gruppe Stickstoff, Sauerstoff, Wasserstoff, Helium, Argon, Kohlendioxid und Erdgas. Vorzugsweise ist das kryogene Kühlmedium 38 Stickstoff. Das kryogene Kühlmedium 38 weist beim Austreten aus dem Werkzeug 16 vorzugsweise eine Temperatur von weniger als -60 °C, insbesondere von weniger als -120 °C, insbesondere von weniger -150 °C, und insbesondere von weniger als -180 °C auf.

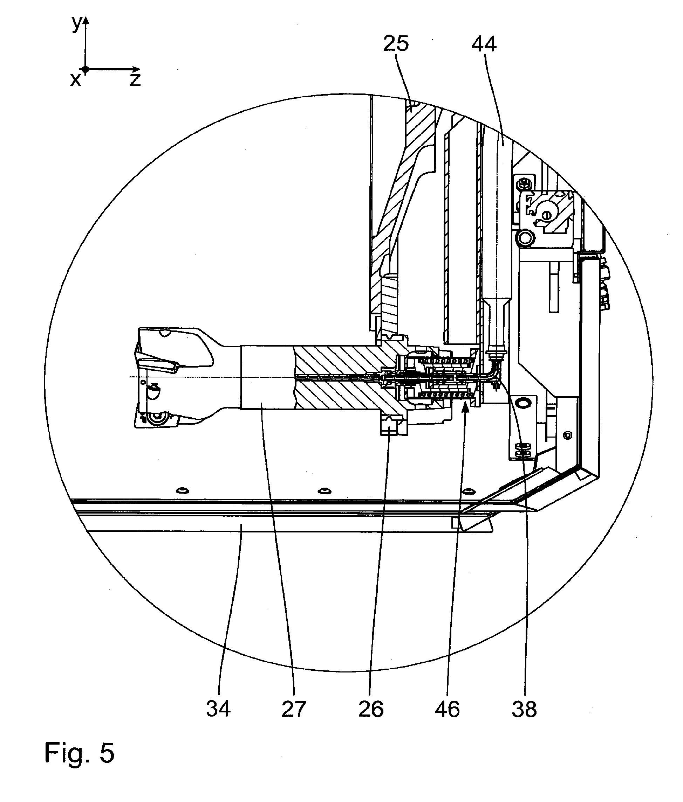

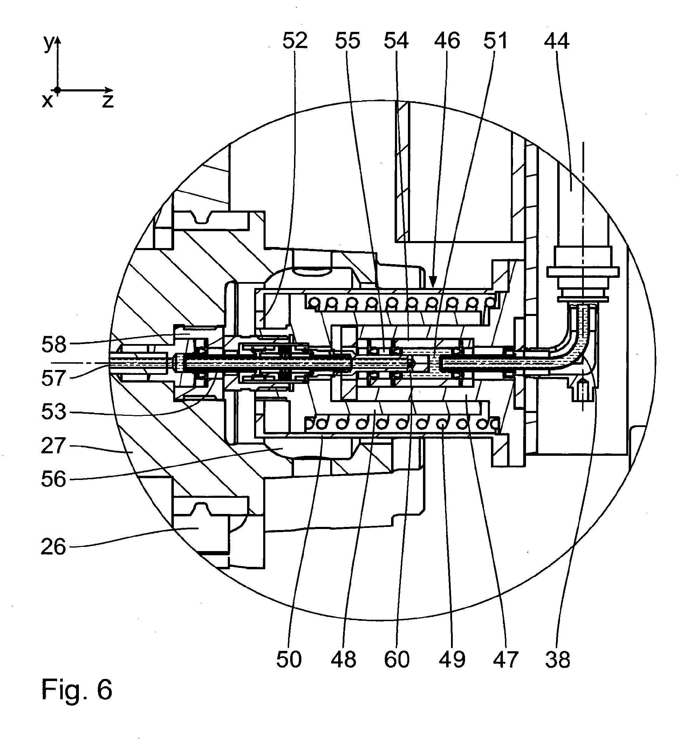

Während der Bearbeitung des Werkstücks 17 ist das nachfolgend zur Bearbeitung des Werkstücks 17 vorgesehene zweite Werkzeug 27 im Werkzeugmagazin 24 an einem Vorkühlplatz angeordnet und mittels der Kopplungseinheit 46 an die Vorkühleinrichtung 36 angeschlossen. Dies ist in den Figuren 5 und 6 veranschaulicht. Das kryogene Kühlmedium 38 wird mittels der Förderpumpe 43 aus dem Speicher 37 über die Vorkühl-Zuführleitung 44 zu der Kopplungseinheit 46 gefördert, die aufgrund der mechanischen Kopplung mit dem Werkzeug 27 die Zufuhr von dem kryogenen Kühlmedium 38 freigibt. Hierzu liegt der Dichteinsatz 58 gegen das äußere Schiebeteil 48 an, so dass die Eintrittsöffnungen 60 zu der Kopplungsleitung 53 und somit die Zufuhr des kryogenen Kühlmediums 38 zu dem Werkzeug 27 freigegeben ist. Das kryogene Kühlmedium 38 strömt somit durch das Werkzeug 27 und kühlt dieses auf die zur Bearbeitung erforderliche Betriebstemperatur herab. Dieser Vorkühlvorgang erfolgt parallel zur Bearbeitung des Werkstücks 17. Das kryogene Kühlmedium 38 hat beim Vorkühlen des Werkzeugs 27 eine Temperatur von weniger als -60 °C, insbesondere von weniger als -120 °C, insbesondere von weniger als -150 °C und insbesondere von weniger als -180 °C.

Ist die Bearbeitung des Werkstücks 17 mittels des Werkzeugs 16 abgeschlossen, so erfolgt ein Werkzeugwechsel. Hierzu wird die Magazinscheibe 25 mit den Werkzeug-Haltern 26 und den darin aufgenommenen Werkzeugen 27 zunächst parallel zu der z-Richtung mittels des Antriebsmotors 33 verfahren, so dass die Kopplungseinheit 46 von dem vorgekühlten Werkzeug 27 entkoppelt wird. Durch das vorgespannte Federelement 49 wird das äußere Schiebeteil 48 derart verlagert, dass der Schließabschnitt 55 im Bereich der Eintrittsöffnungen 60 der Kopplungsleitung 53 angeordnet ist, so dass die Zufuhr des kryogenen Kühlmediums 38 zu der Kopplungsleitung 53 unterbrochen wird. Anschließend wird die Magazinscheibe 25 derart um die Drehachse 30 gedreht, dass ein freier Werkzeug-Halter 26 an dem Werkzeugwechselplatz angeordnet ist. Die Werkzeugspindel 12 wird daraufhin zu dem Werkzeugmagazin 24 verfahren und legt das Werkzeug 16 in dem freien Werkzeug-Halter 26 ab.

Anschließend wird die Magazinscheibe 25 derart um die Drehachse 30 verlagert, dass das vorgekühlte Werkzeug 27 an dem Werkzeugwechselplatz angeordnet ist und dort von der freien Werkzeugspindel 12 aufgenommen wird. Durch Verfahren der Werkzeugspindel 12 wird das zweite Werkzeug 27 in eine Bearbeitungsposition zu dem weiter zu bearbeitenden Werkstück 17 verfahren. Das zweite Werkzeug 27 weist zu Beginn der Bearbeitung des Werkstücks 17 eine Temperatur von höchstens -60 °C, insbesondere von höchstens -120 °C, insbesondere von höchstens -150 °C und insbesondere von höchstens -180 °C auf. Sofern sich das zweite Werkzeug 27 nach dem Entkoppeln von der Vorkühleinrichtung 36 zu stark erwärmt hat, kann dieses bereits vor der Bearbeitung des Werkstücks 17 in der Werkzeugspindel 12 mittels der Kühleinrichtung 35 gekühlt werden.

Bei der Bearbeitung des Werkstücks 17 mittels des zweiten Werkzeugs 27 wird dieses in der bereits beschriebenen Weise mittels des kryogenen Kühlmediums 38 gekühlt.

Während der Bearbeitung des Werkstücks 17 mit dem Werkzeug 27 wird die Magazinscheibe 25 derart um die Drehachse 30 gedreht, dass ein nachfolgend zur Bearbeitung des Werkstücks 17 vorgesehenes Werkzeug 27 erneut an dem Vorkühlplatz angeordnet ist. Durch lineares Verfahren der Magazinscheibe 25 wird das auf dem Vorkühlplatz befindliche Werkzeug 27 mit der Kopplungseinheit 46 mechanisch gekoppelt. Hierbei betätigt der Dichtsatz 58 des Werkzeugs 27 das äußere Schiebeteil 48 gegen die Federkraft des Federelements 49, so dass der Freigabeabschnitt 54 im Bereich der Eintrittsöffnungen 60 der Kopplungsleitung 53 angeordnet ist und die Zufuhr des kryogenen Kühlmediums 38 zu dem Werkzeug 27 freigibt. Das kryogene Kühlmedium 38 durchströmt die Kopplungsleitung 53 und den Kühlkanal 57 und kühlt das nachfolgend zur Bearbeitung vorgesehene Werkzeug 27 auf die erforderliche Bearbeitungstemperatur vor.

## Patentansprüche

1. Verfahren zum spanenden Bearbeiten von metallischen Werkstücken mit folgenden Schritten:
- Bearbeiten eines Werkstücks (17) mittels eines ersten Werkzeugs (16), wobei
-- das erste Werkzeug (16) mittels eines ersten Werkzeug-Halters (13) gehalten wird und
-- das erste Werkzeug (16) während der Bearbeitung mittels eines kryogenen Kühlmediums (38) gekühlt wird,
- Vorkühlen eines zur Bearbeitung des Werkstücks (17) vorgesehenen zweiten Werkzeugs (27), wobei
-- das zweite Werkzeug (27) mittels eines zweiten Werkzeug-Halters (26) gehalten wird und
-- das zweite Werkzeug (27) während der Bearbeitung des Werkstücks (17) mittels des ersten Werkzeugs (26) mittels des kryogenen Kühlmediums (38) gekühlt wird,
- Bearbeiten des Werkstücks (17) mittels des vorgekühlten zweiten Werkzeugs (27), wobei das zweite Werkzeug (27) während der Bearbeitung mittels des kryogenen Kühlmediums (38) gekühlt wird.

2. Verfahren nach Anspruch 1, **dadurch gekennzeichnet, dass** das kryogene Kühlmedium (38) mindestens ein Medium aus der Gruppe Stickstoff, Sauerstoff, Wasserstoff, Helium, Argon, Kohlendioxid und Erdgas ist.

3. Verfahren nach Anspruch 1 oder 2, **dadurch gekennzeichnet, dass** das kryogene Kühlmedium (38) beim Vorkühlen des zweiten Werkzeugs (27) eine Temperatur von weniger als -60 °C, insbesondere von weniger als -120 °C, insbesondere von weniger als -150 °C und insbesondere von weniger als -180 °C aufweist.

4. Verfahren nach einem der Ansprüche 1 bis 3, **dadurch gekennzeichnet, dass** das zweite Werkzeug (27) in einer Bearbeitungsposition eine Temperatur von höchstens -60 °C, insbesondere von höchstens -120 °C, insbesondere von höchstens -150 °C und insbesondere von höchstens -180 °C aufweist.

5. Verfahren nach einem der Ansprüche 1 bis 4, **dadurch gekennzeichnet, dass** das zweite Werkzeug (27) beim Vorkühlen von dem kryogenen Kühlmedium (38) durchströmt wird.

6. Verfahren nach einem der Ansprüche 1 bis 5, **dadurch gekennzeichnet, dass** das zweite Werkzeug (27) beim Vorkühlen mit einer Vorkühleinrichtung (36) zum Speichern und Zuführen des kryogenen Kühlmediums (38) mechanisch gekoppelt ist.

7. Verfahren nach Anspruch 6, **dadurch gekennzeichnet, dass** das zweite Werkzeug (27) durch eine Relativbewegung zwischen dem zweiten Werkzeug-Halter (26) und der Vorkühleinrichtung (36) von dieser entkoppelt und das Ausströmen des kryogenen Kühlmediums (38) aus der Vorkühleinrichtung (36) unterbrochen wird.

8. Verfahren nach Anspruch 6 oder 7, **dadurch gekennzeichnet, dass** ein nachfolgend zur Bearbeitung des Werkstücks (17) vorgesehenes Werkzeug (27) durch eine Relativbewegung zwischen einem Werkzeug-Halter (26) und der Vorkühleinrichtung (36) mit dieser gekoppelt und der Zustrom des kryogenen Kühlmediums (38) zu dem Werkzeug (27) freigegeben wird.

9. Werkzeugmaschine zum spanenden Bearbeiten von metallischen Werkstücken, umfassend
- eine Werkstück-Aufnahme (19) zum Spannen eines zu bearbeitenden Werkstücks (17),
- einen ersten Werkzeug-Halter (13) zum Halten eines ersten Werkzeugs (16),
- eine Kühleinrichtung (35) zum Zuführen eines kryogenen Kühlmediums (38) zu dem in dem ersten Werkzeug-Halter (13) gehaltenen ersten Werkzeug (16), und
- einen zweiten Werkzeug-Halter (26) zum Vorhalten eines zur Bearbeitung vorgesehenen zweiten Werkzeugs (27),
**gekennzeichnet durch**
- eine Vorkühleinrichtung (36) zum Zuführen des kryogenen Kühlmediums (38) zu dem im zweiten Werkzeug-Halter (26) gehaltenen zweiten Werkzeug (27), und
- eine Steuereinrichtung (59), die derart ausgebildet ist, dass während der Bearbeitung des Werkstücks (17) mittels des ersten Werkzeugs (16) das nachfolgend zur Bearbeitung des Werkstücks (17) vorgesehene zweite Werkzeug (27) mittels des kryogenen Kühlmediums (38) vorkühlbar ist.

10. Werkzeugmaschine nach Anspruch 9, **dadurch gekennzeichnet, dass** die Vorkühleinrichtung (36) umfasst:
- einen thermisch isolierend ausgebildeten Speicher (37) zum Bereitstellen des kryogenen Kühlmediums (38),
- ein Kühlaggregat (39) zum Kühlen des kryogenen Kühlmediums (38) und
- eine Vorkühl-Zuführleitung (44) zum Zuführen des kryogenen Kühlmediums (38) von dem Speicher (37) zu dem zweiten Werkzeug-Halter (26).

11. Werkzeugmaschine nach Anspruch 9 oder 10, **dadurch gekennzeichnet, dass** die Vorkühleinrichtung (36) eine Kopplungseinheit (46) aufweist, die derart ausgebildet ist, dass:
- die Zufuhr des kryogenen Kühlmediums (38) zu dem Werkzeug (27) freigegeben ist, wenn das Werkzeug (27) mit der Kopplungseinheit (46) mechanisch gekoppelt ist, und
- die Zufuhr des kryogenen Kühlmediums (38) zu dem Werkzeug (27) unterbrochen ist, wenn das Werkzeug (27) von der Kopplungseinheit (46) mechanisch entkoppelt ist.

12. Werkzeugmaschine nach einem der Ansprüche 9 bis 11, **dadurch gekennzeichnet, dass** die Vorkühleinrichtung (36) relativ zu dem zweiten Werkzeug-Halter (26) verlagerbar ist.

13. Werkzeugmaschine nach einem der Ansprüche 9 bis 12, **dadurch gekennzeichnet, dass** der zweite Werkzeug-Halter (26) Teil eines Werkzeugmagazins (24), insbesondere eines Scheibenmagazins ist.

14. Werkzeugmaschine nach einem der Ansprüche 10 bis 13, **dadurch gekennzeichnet, dass** zum Zuführen des kryogenen Kühlmediums (38) zu dem ersten Werkzeug (16) von dem Speicher (37) zu dem ersten Werkzeug-Halter (13) eine Kühl-Zuführleitung (41) verläuft.

15. Werkzeugmaschine nach einem der Ansprüche 10 bis 14, **dadurch gekennzeichnet, dass** zumindest eine Zuführleitung (41, 44) thermisch isolierend ausgebildet ist.

## Claims

1. Method for machining metallic workpieces with the following steps:
- processing a workpiece (17) by means of a first tool (16), with
-- the first tool (16) being held by means of a first chuck (13) and
-- the first tool (16) being cooled during processing by a cryogenic coolant (38),
- precooling of a second tool (27) provided for processing the workpiece (17), with
-- the second tool (27) being held by means of a second chuck (26) and
-- the second tool (27) during the processing of the workpiece (17) by means of the first tool (26) being cooled by the cryogenic coolant (38),
- processing the workpiece (17) by means of the precooled second tool (27), with the second tool (27) during processing being cooled by the cryogenic coolant (38).

2. Method according to claim 1, **characterized in that** the cryogenic coolant (38) is at least a medium from the group of nitrogen, oxygen, hydrogen, helium, argon, carbon dioxide and natural gas.

3. Method according to claim 1 or 2, **characterized in that** during precooling of the second tool (27), the cryogenic coolant (38) has a temperature of less than -60°C, particularly less than -120°C, particularly less than -150°C and particularly less than -180°C.

4. Method according to one of claims 1 to 3, **characterized in that,** in a processing position, the second tool (27) has a temperature of at most -60°C, particularly at most -120°C, particularly at most -150°C, and particularly at most -180°C.

5. Method according to one of claims 1 to 4, **characterized in that,** during precooling, the second tool (27) has the cryogenic coolant (38) flowing through it.

6. Method according to one of claims 1 to 5, **characterized in that,** during the precooling, the second tool (27) is mechanically coupled to a precooling device (36) for storage and supply of cryogenic coolant (38).

7. Method according to claim 6, **characterized in that** the second tool (27) is decoupled by a relative motion between the second chuck (26) and the precooling device (36) from said device, and the outflow of the cryogenic coolant (38) from the precooling device (36) is interrupted.

8. Method according to claim 6 or 7, **characterized in that** a tool (27) provided for a subsequent processing of the workpiece (17), by a relative motion between a chuck (26) and the precooling device (36), is coupled with said device and the supply of the cryogenic coolant (38) is released to the tool (27).

9. Machine tool for machining metallic workpieces, comprising:
- a workpiece support (19) for clamping a workpiece (17) to be processed,
- a first chuck (13) for holding a first tool (16),
- a cooling device (35) for supplying a cryogenic coolant (38) to the first tool (16) held in the first chuck (13), and
- a second chuck (26) for holding available a second tool (27) provided for processing,
**characterized by**
- a precooling device (36) for supplying the cryogenic coolant (38) to the second tool (27) held in the second chuck (26), and
- a control device (59) which is configured such that during the processing of the workpiece (17) by means of the first tool (16), the second tool (27) subsequently provided for the processing of the workpiece (17) is precoolable by the cryogenic coolant (38).

10. Machine tool according to claim 9, **characterized in that** the precooling device (36) comprises:
- a reservoir (37) configured thermally insulating to provide the cryogenic coolant (38),
- a cooling unit (39) for cooling the cryogenic coolant (38) and
- a precoolant supply line (44) for supplying the cryogenic coolant (38) from the reservoir (37) to the second chuck (26).

11. Machine tool according to claim 9 or 10, **characterized in that** the precooling device (36) comprises a coupling unit (46) which is configured such that:
- the supply of the cryogenic coolant (38) to the tool (27) is released when the tool (27) is mechanically coupled to the coupling unit (46), and
- the supply of the cryogenic coolant (38) to the tool (27) is interrupted when the tool (27) is mechanically decoupled from the coupling unit (46).

12. Machine tool according to one of claims 9 to 11, **characterized in that** the precooling device (36) is movable relative to the second chuck (26).

13. Machine tool according to one of claims 9 to 12, **characterized in that** the second chuck (26) is a part of a tool magazine (24), particularly a disk magazine.

14. Machine tool according to one of claims 10 to 13, **characterized in that** for feeding the cryogenic coolant (38) to the first tool (16) a coolant supply line (41) extends from the reservoir (37) to the first chuck (13).

15. Machine tool according to one of claims 10 to 14, **characterized in that** at least one supply line (41, 44) is configured thermally insulating.

## Revendications

1. Procédé pour l'usinage par enlèvement de copeaux de pièces métalliques comprenant les étapes suivantes :
- usinage d'une pièce (17) au moyen d'un premier outil (16), où
-- le premier outil (16) est maintenu au moyen d'un premier porte-outil (13) et
-- le premier outil (16) est refroidi au moyen d'un réfrigérant cryogène (38) pendant l'usinage,
- refroidissement préliminaire d'un deuxième outil (27) prévu pour l'usinage d'une pièce (17), où
-- le deuxième outil (27) est maintenu au moyen d'un deuxième porte-outil (26), et
-- le deuxième outil (27) est refroidi au moyen du réfrigérant cryogène (38) pendant l'usinage de la pièce (17) au moyen du premier outil (26),
- usinage de la pièce (17) au moyen du deuxième outil (27) refroidi préliminairement, où le deuxième outil (27) est refroidi pendant l'usinage au moyen du réfrigérant cryogène (38).

2. Procédé selon la revendication 1, **caractérisé en ce que** le réfrigérant cryogène (38) est au moins un milieu faisant partie du groupe constitué par l'azote, l'oxygène, l'hydrogène, l'hélium, l'argon, le dioxyde de carbone et le gaz naturel.

3. Procédé selon les revendications 1 ou 2, **caractérisé en ce que** le réfrigérant cryogène (38) présente une température inférieure à - 60 °C, notamment inférieure à - 120 °C, en particulier inférieure à - 150 °C et particulièrement inférieure à - 180 °C lors du refroidissement préliminaire du deuxième outil (27).

4. Procédé selon l'une des revendications 1 à 3, **caractérisé en ce que** le deuxième outil (27) présente une température maximale de - 60 °C, notamment d'au maximum - 120 °C, en particulier, d'au maximum - 150 °C et particulièrement d'au maximum - 180 °C, dans une position d'usinage.

5. Procédé selon l'une des revendications 1 à 4, **caractérisé en ce que** le deuxième outil (27) est traversé par un flux de réfrigérant cryogène (38) lors du refroidissement préliminaire.

6. Procédé selon l'une des revendications 1 à 5, **caractérisé en ce que** le deuxième outil (27) est couplé mécaniquement avec un système de refroidissement préliminaire (36) pendant le refroidissement préliminaire, pour l'approvisionnement et l'alimentation du réfrigérant cryogène (38).

7. Procédé selon la revendication 6, **caractérisé en ce que** le deuxième outil (27) est découplé du système de refroidissement préliminaire (36) par un déplacement relatif entre celui-ci et le deuxième porte-outil (26) et que l'écoulement de réfrigérant cryogène (38) est interrompu à partir du système de refroidissement préliminaire (36).

8. Procédé selon les revendications 6 ou 7, **caractérisé en ce qu'**un outil (27), prévu pour l'usinage ultérieur de la pièce (17) est couplé avec le système de refroidissement préliminaire (36) par un déplacement relatif entre celui-ci et le porte-outil (26) et que le flux d'approvisionnement en réfrigérant cryogène (38) est libéré vers l'outil (27).

9. Machine-outil pour l'usinage par enlèvement de copeaux de pièces métalliques, comprenant
- un logement de pièce (19) pour le serrage d'une pièce (17) à usiner,
- un premier porte-outil (13) pour le maintien d'un premier outil (16),
- un système de refroidissement (35) pour l'alimentation d'un réfrigérant cryogène (38) vers le premier outil (16) maintenu dans le premier porte-outil (13), et
- un deuxième porte-outil (26) pour la présentation d'un deuxième outil (27) prévu pour l'usinage,
**caractérisée par**
- un système de refroidissement préliminaire (36) pour l'alimentation du réfrigérant cryogène (38) vers le deuxième outil (27) maintenu dans le deuxième porte-outil (26), et
- un système de commande (59) qui est conçu de telle façon que, pendant l'usinage de la pièce (17) au moyen du premier outil (17), le deuxième outil (27) prévu pour l'usinage ultérieur de la pièce (17) peut être refroidi préliminairement au moyen du réfrigérant cryogène (38).

10. Machine-outil selon la revendication 9, **caractérisée en ce que** le système de refroidissement préliminaire (36) comprend :
- une réserve (37) conçue isolée thermiquement pour la mise à disposition du réfrigérant cryogène (38),
- un ensemble de refroidissement (39) pour le refroidissement du réfrigérant cryogène (38), et
- une conduite d'amenée (44) pour le refroidissement préliminaire en vue de l'approvisionnement en réfrigérant cryogène (38) de la réserve (37) vers le deuxième porte-outil (26).

11. Machine-outil selon les revendications 9 ou 10, **caractérisée en ce que** le système de refroidissement préliminaire (36) présente une unité de couplage (46) qui est conçue de telle façon que :
- l'amenée du réfrigérant cryogène (38) vers l'outil (27) est rendue libre lorsque l'outil (27) est couplé mécaniquement avec l'unité de couplage (46), et
- l'amenée du réfrigérant cryogène (38) vers l'outil (27) est interrompue lorsque l'outil (27) est découplé mécaniquement de l'unité de couplage (46).

12. Machine-outil selon l'une des revendications 9 à 11, **caractérisée en ce que** le système de refroidissement préliminaire (36) peut être déplacé relativement par rapport au deuxième porte-outil (26).

13. Machine-outil selon l'une des revendications 9 à 12, **caractérisée en ce que** le deuxième porte-outil (26) est un composant d'un magasin d'outils (24), notamment d'un magasin de disques.

14. Machine-outil selon l'une des revendications 10 à 13, **caractérisée en ce que,** pour l'amenée du réfrigérant cryogène (38) vers le premier outil (16), une conduite d'approvisionnement pour le froid (41) s'étend à partir de la réserve (37) vers le premier porte-outil (13).

15. Machine-outil selon l'une des revendications 10 à 14, **caractérisée en ce qu'**au moins une conduite d'amenée (41, 44) est conçue isolée thermiquement.
